# EUROPÄISCHE PATENTSCHRIFT

(11) **EP 1 838 974 B1**
(45) Veröffentlichungstag und Bekanntmachung des Hinweises auf die Patenterteilung: **02.07.2008**
(21) Anmeldenummer: 05798525.1
(22) Anmeldetag: 13.10.2005
(51) Int. Cl.: F16D 65/14, B60T 17/08

(54) **BREMSZYLINDER MIT PARKBREMSFUNKTION**
BRAKE CYLINDER WITH PARKING BRAKE FUNCTION
CYLINDRE DE FREIN PRESENTANT UNE FONCTION DE FREIN DE STATIONNEMENT

(30) Priorität: 11.01.2005 DE 102005001234
(43) Veröffentlichungstag der Anmeldung: 03.10.2007
(73) Patentinhaber: WABCO GmbH, 30453 Hannover (DE)
(72) Erfinder: SCHRADER, Frank, 30916 Isernhagen (DE)
(74) Vertreter: Günther, Constantin
(86) Internationale Anmeldenummer: PCT/EP2005/010984
(87) Internationale Veröffentlichungsnummer: WO 2006/074718

(56) Entgegenhaltungen:
- EP-A- 0 526 273
- DE-A1- 19 648 581
- US-A1- 2003 070 888
- US-B1- 6 311 808

## Beschreibung

Die Erfindung bezieht sich auf einen Bremszylinder mit Parkbremsfunktion gemäß dem Oberbegriff der Patentansprüche 1 und 2. So ein Zylinder geht z.B aus der DE-A-196 48581 hervor.

Derartige Bremszylinder haben zum einen die Aufgabe, im Rahmen einer Betriebsbremsung die eigentlichen Bremsen eines Fahrzeugs zu betätigen. Als Antrieb für die Bremszylinder dient dabei, insbesondere bei Nutzfahrzeugen, überwiegend Druckluft.

Zum anderen können derartige Bremszylinder zusätzlich die Funktion einer Parkbremse mit übernehmen. Für eine Parkbremse wird gesetzlich gefordert, dass die Bremswirkung auch ohne Einwirkung eines Druckmittels aufrechterhalten bleiben muss. Der Bremszylinder muss also in seiner ausgefahrenen Stellung, wobei diese Stellung noch vom Abrieb bzw. Verschleiß der Bremsbeläge abhängig ist, verriegelt werden können, um die Bremswirkung im unbelüfteten Zustand aufrechterhalten zu können.

Hierzu ist z. B. aus der EP 0718168 A1 ein Bremszylinder für eine druckluftbetätigte Fahrzeugbremse bekannt, der eine lösbare mechanische Verriegelungseinrichtung aufweist. Diese bleibt während Betriebsbremsungen außer Funktion, kann aber während Hilfs- und/oder Feststellbremsungen in eine Verriegelungsstellung überführt werden. Nachteilig an der bekannten Anordnung ist der relativ komplizierte Aufbau und die nur in Stufen mögliche Verstellbarkeit der mit Zähnen versehenen mechanischen Verriegelungseinrichtung.

Weiter ist aus der EP 0377898 A1 ein einstufiger Bremszylinder mit Kolbenstangen-Klemmvorrichtung bekannt. Im Gegensatz zum oben genannten Stand der Technik ist hier eine stufenlose Klemmung möglich. Diese erfolgt dadurch, dass in der Endstellung (Parkstellung) der Kolbenstange ein konusförmiger Klemmring auf die Kolbenstange gepresst wird und diese damit arretiert. Die Betätigung des Klemmrings erfolgt über eine extra Druckluftleitung. Nachteilig an der bekannten Ausbildung ist wiederum der relativ komplizierte Aufbau und die grossen infolge der Verklemmung auftretenden radialen Kräfte.

Schließlich sind noch sogenannte Federspeicher-Bremszylinder bekannt (DE 31 13 586 A1). Diese enthalten eine starke Feder, welche im unbelüfteten Zustand der Federspeicher-Druckkammer die Bremse betätigt. Zum Lösen des Federspeichers wird die Feder mittel Druckluft zusammengepresst. Derartige Federspeicher haben eine Parkbremsfunktion schon von Natur aus integriert. Zum Not-Lösen des Federspeichers bei ausgefallener Druckluft ist eine Lösevorrichtung nötig.

Federspeicher-Bremszylinder bauen relativ groß und sind deshalb für beengte Platzverhältnisse, wie sie z.B. an der Vorderachse eines Nutzfahrzeugs vorliegen, weniger geeignet.

Der Erfindung liegt die Aufgabe zugrunde, einen Bremszylinder mit Parkbremsfunktion anzugeben, welcher eine zuverlässige und mechanisch einfache, stufenlose Arretierung in der Parkbremsstellung erlaubt. Die Arretierung soll für den Fahrbetrieb leicht wieder lösbar sein. Der Bremszylinder soll außerdem platzsparend und kostengünstig sein.

Diese Aufgabe wird durch die in den Patentansprüchen 1 und 2 enthaltene Erfindung gelöst.

Durch die Verwendung eines zentralen Gewindebolzens sowie darauf laufenden Klemmmutter, welche in einer unteren Endstellung am Kolben des Bremszylinders anliegt und diesen in der Parkstellung arretiert, ist eine einfache und besonders zuverlässige stufenlose Verriegelung realisiert. Der Antrieb der Klemmmutter oder der Antrieb des Gewindebolzens bei feststehender Klemmmutter kann beliebig, beispielsweise mit einem Elektromotor oder mit einem Schaufelrad und Druckluftantrieb erfolgen. Da eine Verstellung der Klemmmutter nur erfolgt, nachdem der Parkbremsdruck aufgebaut ist, muss dabei lediglich die Reibung der Klemmmutter auf dem Gewindebolzen überwunden werden, sodass kleine Antriebskräfte ausreichend sind.

Obwohl die erfindungsgemäße Verriegelung im folgenden an Hand eines Kolbenzylinders beschrieben wird, ist prinzipiell auch eine Anwendung bei einem Membranzylinder möglich.

Die Erfindung wird im folgenden anhand einer Zeichnung näher erläutert.

Diese zeigt in
- Fig. 1: eine Schnittzeichnung des erfindungsgemäßen Bremszylinders mit feststehendem Gewindebolzen,
- Fig. 2: eine Schnittzeichnung des erfindungsgemäßen Bremszylinders mit drehbarem Gewindebolzen,
- Fig. 3: eine perspektivische Darstellung als Teilschnitt von Klemmmutter, Mitnehmer und zentralem Gewindebolzen,
- Fig. 4: eine perspektivische Schnitt-Darstellung des Bremszylinders nach Fig. 1 mit feststehendem Gewindebolzen,
- Fig. 5: einen Antrieb mit Elektromotor über eine Antriebswelle mit Schneckengetriebe in Teilschnitt-Darstellung,
- Fig. 6: einen Antrieb mit Elektromotor über einen Riementrieb in Teilschnitt-Darstellung,
- Fig. 7: einen Antrieb mit einem integrierten, koaxialen Elektromotor in Teilschnitt-Darstellung, und in
- Fig. 8: einen Druckluft-Antrieb mit Schaufelrad in teilschnitt-Darstellung.

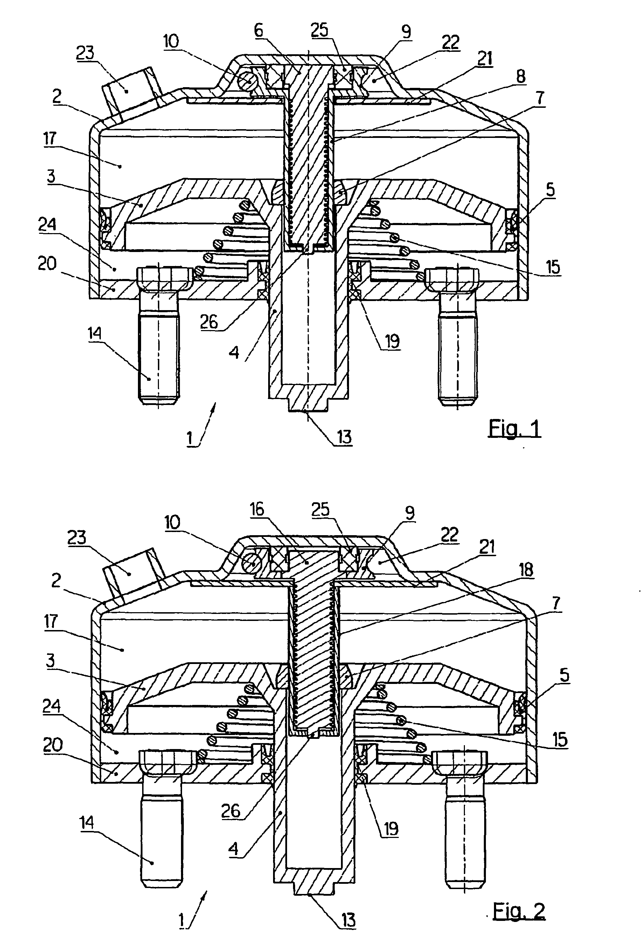

In Fig. 1 ist eine Schnittzeichnung des erfindungsgemäßen Bremszylinders (1) mit feststehenden Gewindebolzen (6) dargestellt. Der Gewindebolzen (6) ist mit seinem oberen Ende am Zylindergehäuse (2) des Bremszylinders (1) befestigt. Der Bremszylinder (1) besteht weiterhin aus einem verschiebbaren Kolben (3), der gegen das Zylindergehäuse (2) mittels einer Dichtung und Führung (5) abgedichtet ist. Der Kolben (3) wird mittels einer Rückstellfeder (15) in seine obere Endstellung gedrückt.

In der gezeichneten unteren Endstellung bzw. hier Parkstellung des Kolbens (15) hat ein Druckraum (17) zwischen Kolben (3) und Zylindergehäuse (2) sein maximales Volumen. Dagegen hat ein Sekundärraum (24) unter dem Kolben (3) sein minimales Volumen.

Der Bremszylinder (1) lässt sich mit Befestigungsbolzen (14) am Fahrzeug, beispielsweise am Bremsengehäuse einer Scheibenbremse, befestigen.

Der Kolben (3) ist nach unten zu einem hohlen Kolbenrohr (4) verlängert. Dieses ist gegen einen Flansch (20) des Bremszylinders (1) mittels einer Dichtung und Führung (19) gedichtet und geführt. Am unteren Ende des Kolbenrohrs (4) befindet sich eine Kraftschnittstelle (13) zu einem (nicht dargestellten) Bremshebel der Scheibenbremse. Mittels diesem lässt sich, auf beliebige Weise, die eigentliche Bremse (nicht dargestellt) betätigen. Dies bedeutet, dass mittels des Bremshebels Bremsbeläge an eine Reibfläche, z.B. eine Bremsscheibe (nicht dargestellt) anpressbar sind.

Über einen Anschluss (23) lässt sich der Druckraum (17) des Bremszylinders mit Druckluft beaufschlagen oder entlüften.

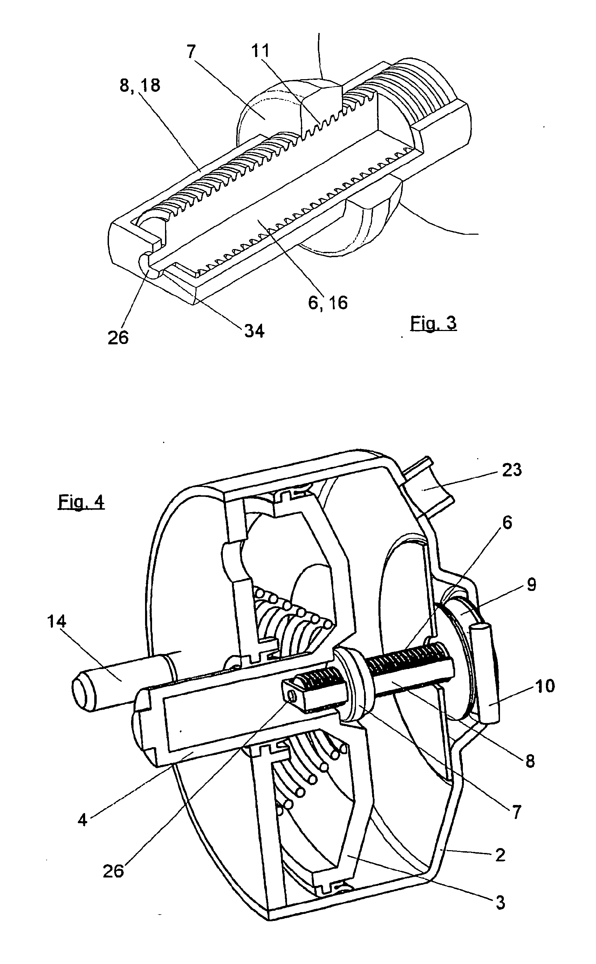

Die erfindungsgemäße Parkbrems-Funktion wird realisiert durch den in das Kolbenrohr (4) hineinragenden Gewindebolzen (6). Auf dem Gewindebolzen (6) befindet sich eine drehbare Klemmmutter (7), die durch einen gabelförmigen Mitnehmer (8) (vgl. Fig. 3 und 4) drehbar ist. Der Mitnehmer (8) durchdringt die Klemmmutter (7) und wird an seinem unteren Ende durch einen Stift (26) am Gewindebolzen (6) geführt.

Der Mitnehmer (8) ist an seinem oberen Ende an einer Mitnehmerspindel (9) befestigt. Die Mitnehmerspindel (9) ist mittels eines Lagers (25) drehbar gelagert. Zum Antrieb der Mitnehmerspindel (9) dient eine Antriebswelle (10). Hierzu ist die Mitnehmerspindel (9) als Schneckenrad und die Antriebswelle (10) als Ritzel bzw. Schnecke ausgebildet. Ein Antriebsraum (22) wird durch eine Trennwand (21) vom Druckraum (17) druckdicht abgetrennt. Zusätzlich ist auch die Antriebswelle (10) nach aussen abgedichtet (nicht dargestellt).

Der erfindungsgemäße Bremszylinder nach Fig. 1 funktioniert wie folgt.

Zum Einlegen der Parkbremse wird der Druckraum (17) über den Anschluss (23) mit Druckluft beaufschlagt. Hierdurch wird der Kolben (3) in eine untere Endstellung bewegt, in welcher die (nicht dargestellten) Bremsbeläge der zu betätigenden Bremse an der Bremsscheibe bzw. Bremstrommel anliegen. Durch einen variabel einstellbaren Parkbremsdruck kann dabei genau die benötigte Parkbremskraft realisiert werden.

Zum Fixieren der Parkbremse wird nun die Antriebswelle (10), beispielsweise durch einen (nicht dargestellten) Elektromotor in Drehung versetzt und hierdurch die Mitnehmerspindel (9) mit dem daran befestigten Mitnehmer (8) ebenfalls gedreht. Die vom Mitnehmer (8) angetriebene Klemmmutter (7) bewegt sich hierdurch auf dem feststehenden Gewindebolzen (6) nach unten in die gezeichnete Endstellung. Hierdurch wird der Kolben (3) in der zuletzt eingenommenen Park-Bremsstellung arretiert.

Nun kann Druckluft aus dem Druckraum (17) abgelassen werden, ohne das sich die Bremse löst. Hiermit ist die Parkbrems-Funktion realisiert.

Zum Lösen der Parkbremse wird zunächst wieder Druckluft in den Druckraum (17) eingelassen, bis die Klemmmutter (7) von der Kraft des Kolbens (3) entlastet ist. Danach wird die Klemmmutter (7) auf dem feststehenden Gewindebolzen (6) durch Drehung der Antriebswelle (10) in die obere Endstellung zurückgebracht. Hiermit ist der Bremszylinder (1) wieder für Betriebsbremsungen bereit.

Der in der Fig. 2 dargestellte Bremszylinder (1) unterscheidet sich von dem der Fig. 1 dadurch, dass hier die Klemmmutter (7) nicht drehbar ist, sondern mittels einer gabelförmigen Führungsstange (18) drehfest gehalten wird. Die Führungsstange (18) kann beispielsweise an der Trennwand (21) befestigt sein. Im Gegensatz zur Fig. 1 ist hier der Gewindebolzen (16) fest mit der Mitnehmerspindel (9) verbunden und lässt sich mittels der Antriebswelle (10) in Drehung versetzen. Mittels dieser Drehung des Gewindebolzens (16) lässt sich die drehfest fixierte Klemmmutter (7) wie in der Fig. 1 in eine untere und obere Endstellung transportieren. Die Funktionsweise der Parkbremse nach der Fig. 2 entspricht im Prinzip der der Fig. 1.

Die Fig. 3 zeigt eine perspektivische Darstellung von Klemmmutter (7), Mitnehmer (8) bzw. Führungsstange (18) sowie zentralem Gewindebolzen (6, 16). Wie bereits beschrieben, ist durch den Mitnehmer (8) bzw. die Führungsstange (18) die Klemmmutter (7) entweder drehbar (siehe Fig. 1) oder drehfest haltbar (siehe Fig. 2). Die Klemmmutter (7) steht mittels eines Innengewindes (11) mit dem innenliegenden Gewindebolzen (6, 16) in formschlüssiger Verbindung. Ein Stift (26) am unteren Ende des feststehenden bzw. drehbaren Gewindebolzens (6, 16) durchdringt eine Bohrung (34) von Mitnehmer bzw. Führungsstange (8, 18) und dient zur Führung bzw. Stabilisierung von Mitnehmer (8) bzw. Führungsstange (18) sowie Gewindebolzen (6, 16).

Die Fig. 4 zeigt den Bremszylinder nach Fig. 1 in perspektivischer Darstellung. Wie in Fig. 1 ist hier der Gewindebolzen (6) am Zylindergehäuse (2) befestigt (nicht sichtbar), und die Klemmmutter (7) lässt sich mittels des am Antriebsrad (9) befestigten Mitnehmers (8) in Drehung versetzen. Die übrigen bezifferten Teile entsprechen denen der Fig. 1.

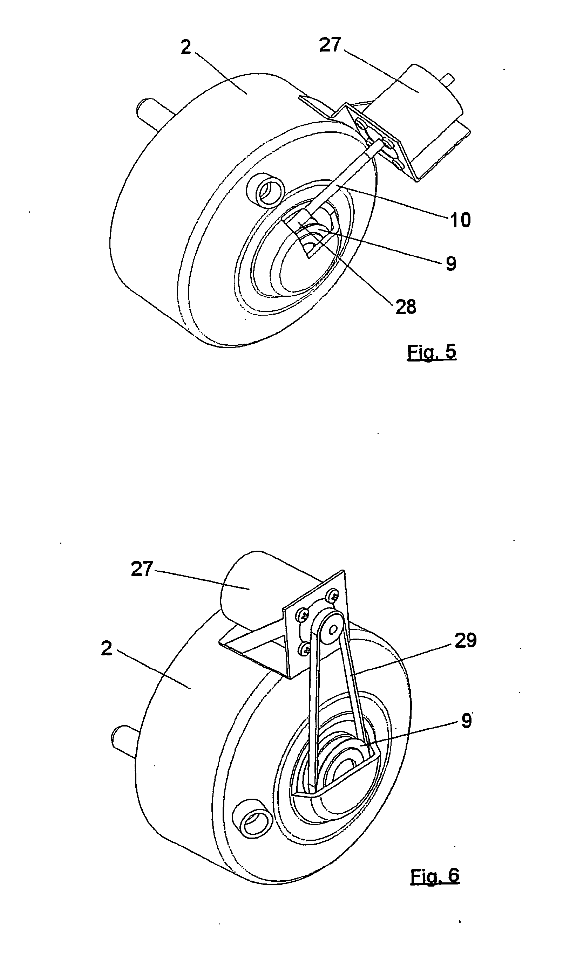

Die Figuren 5 bis 8 zeigen verschiedene vorteilhafte Antriebsmöglichkeiten für den gabelförmigen Mitnehmer (8) bzw. den drehbaren Gewindebolzen (18).

In Fig. 5 erfolgt der Antrieb der Mitnehmerspindel (9) über einen außen am Zylindergehäuse (2) angeflanschten Elektromotor (27). Dieser kann über eine Antriebswelle (10), die mit einem Ritzel bzw. einer Schnecke (28) versehen ist, das in eine entsprechende Verzahnung der Mitnehmerspindel (9) eingreift, letztere in Drehung versetzen. Je nach Drehrichtung kann somit die Parkbremse eingelegt oder gelöst werden. Durch die infolge des Schneckentriebs vorliegende hohe Untersetzung kann ein hochtouriger Elektromotor verwendet werden.

Gemäss Fig. 6 erfolgt der Antrieb alternativ über einen umlaufenden Riemen (29), der Elektromotor (27) und Mitnehmerspindel (9) verbindet. Die Mitnehmerspindel (9) ist hierzu als Riemenscheibe ausgebildet.

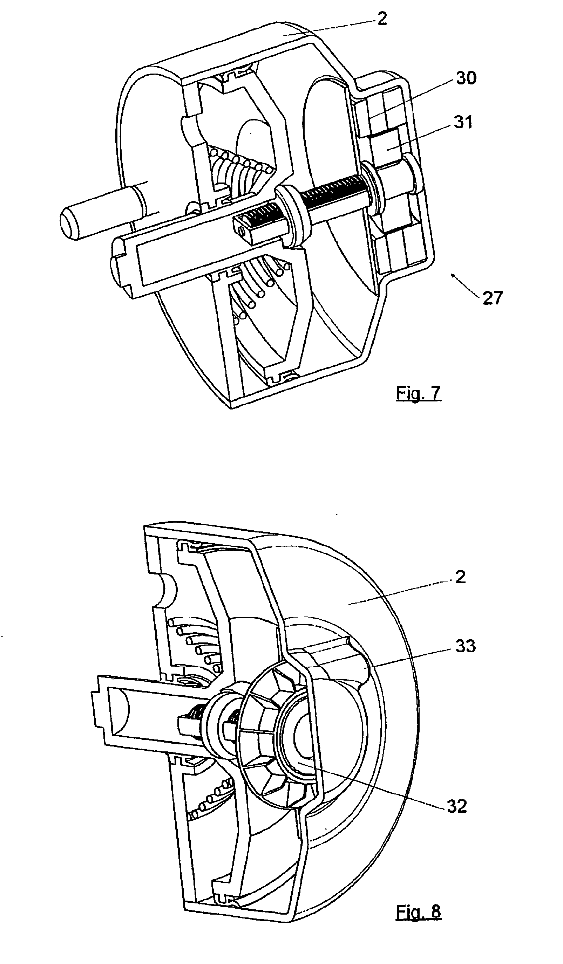

Nach Fig. 7 erfolgt der Antrieb des drehbaren Mitnehmers (8) (s. Fig. 1) bzw. des drehbaren Gewindebolzens (16) (s. Fig. 2) alternativ durch einen im Zylindergehäuse (2) befindlichen, koaxialen Elektromotor (27). Der Elektromotor (27) besteht dabei aus einem inneren mit Magneten versehenen Anker (31) und einer äußeren Wicklung (30).

Der Anker (31) ist mit dem Mitnehmer (8) bzw. dem Gewindebolzen (16) verbunden. Zur Aufnahme des Elektromotors (27) ist das Zylindergehäuse (2) mit einer Ausbuchtung versehen, wodurch sich die Baulänge des Bremszylinders (1) etwas vergrößert. Der Vorteil dieser Ausführung ist, dass der Elektromotor geschützt im Inneren des Bremszylinders (1) liegt.

Bei den Ausführungen nach den Fig. 5 bis 7 muss eine Abschaltung des Stromes des Elektromotors (27) dann erfolgen, wenn die Klemmmutter (7) in der unteren oder oberen Endstellung angekommen ist.

Dies kann zweckmäßig über eine Sensierung des Antriebsstroms des Elektromotors (27) erfolgen. Falls dieser infolge des mechanischen Widerstandes der Klemmmutter (7) einen vorgegebenen Wert übersteigt, kann darauf geschlossen werden, dass eine der Endstellungen erreicht ist, und der Strom deshalb abgeschaltet werden kann.

Alternativ kann der Anstieg des mechanischen Widerstandes in den Endstellungen auch über einen separaten Kraftsensor erfolgen, der z.B. in die Mitnehmerspindel (9) bzw. in den Kraftfluß der abstützenden Bauteile eingebaut ist (nicht dargestellt). Anstelle dieser axialen Kraftsensierung kann auch wahlweise eine radiale Kraftsensierung erfolgen, welche das Drehmoment des Antriebs erfasst.

Weiter alternativ kann die Abschaltung des Antriebsstromes auch nach Erreichen einer vorbestimmten Zeitdauer erfolgen. Diese wird so ausgelegt, dass in dieser Zeit ein Durchlaufen des vollen Weges der Klemmmutter (7) auf dem Gewindebolzen (16) gewährleistet ist.

Gemäss Fig. 8 ist die Mitnehmerspindel (9) alternativ als Schaufelrad (32) ausgebildet. Zum Antrieb des Schaufelrades (32) dient Druckluft, welche für eine Drehrichtung über einen Druckluft-Anschluss (33) zugeführt wird. Für die umgekehrte Drehrichtung dient ein zweiter, dem Anschluss (33) gegenüberliegender Anschluss (nicht sichtbar). Der dem mit Druckluft beaufschlagtem Anschluss gegenüberliegende Anschluss dient jeweils als Luftausslass. Die Dauer der Beaufschlagung mit Druckluft kann wieder zeitabhängig gesteuert sein. Es kann aber auch eine Kraftsensierung der oben beschriebenen Art vorgesehen werden.

Vorteil dieser Variante ist, dass der Bauraum des Bremszylinders (1) durch den Wegfall außenliegender Teile besonders klein ausfällt.

## Patentansprüche

1. Bremszylinder (1) mit Parkbremsfunktion, insbesondere für Nutzfahrzeuge, mit einem Zylindergehäuse (2), einem Kolben (3), und einem Kolbenrohr (4) zum Betätigen einer Bremse,
**gekennzeichnet durch** folgende Merkmale:
a) einen in das Kolbenrohr (4) hineinragenden, feststehenden Gewindebolzen (6), der mit seinem oberen Ende am Zylindergehäuse (2) befestigt ist,
b) eine auf dem feststehenden Gewindebolzen (6) laufende Klemmmutter (7), die in einer unteren Endstellung (Parkstellung) am Kolben (3) anliegt;
c) einen vorzugsweise gabelförmigen drehbaren Mitnehmer (8), der in die Klemmmutter (7) eingreift;
d) einen Antrieb (9, 10) für eine Drehbewegung des Mitnehmers (8).

2. Bremszylinder (1) mit Parkbremsfunktion, insbesondere für Nutzfahrzeuge, mit einem Zylindergehäuse (2), einem Kolben (3), und einem Kolbenrohr (4) zum Betätigen einer Bremse,
**gekennzeichnet durch** folgende Merkmale:
a) einen in das Kolbenrohr (4) hineinragenden, drehbaren Gewindebolzen (16), der mit seinem oberen Ende an einer Mitnehmerspindel (9) befestigt ist;
b) eine auf dem drehbaren Gewindebolzen (16) laufende, nicht drehbare Klemmmutter (7), die in einer unteren Endstellung (Parkstellung) am Kolben (3) anliegt;
c) eine vorzugsweise gabelförmige feststehende Führungsstange (18), die in die Klemmmutter (7) eingreift;
d) einen Antrieb (9, 10) für eine Drehbewegung des drehbaren Gewindebolzens (16).

3. Bremszylinder nach Anspruch 1 oder 2, **dadurch gekennzeichnet, dass** der Antrieb des Mitnehmers (8) oder des drehbaren Gewindebolzens (16) über eine mit diesen verbundene drehbare Mitnehmerspindel (9) erfolgt.

4. Bremszylinder nach Anspruch 3, **dadurch gekennzeichnet, dass** die Mitnehmerspindel (9) verzahnt ist, und über eine mit einer Schnecke (28) versehene Antriebswelle (10) von einem externen Elektromotor (27) angetrieben wird.

5. Bremszylinder nach Anspruch 3, **dadurch gekennzeichnet, dass** der Antrieb der Mitnehmerspindel (9) über einen umlaufenden Riemen (29) erfolgt, der von einem externen Elektromotor (27) angetrieben wird.

6. Bremszylinder nach Anspruch 1 oder 2, **dadurch gekennzeichnet, dass** der Antrieb des drehbaren Mitnehmers (8) oder des drehbaren Gewindebolzens (16) mit einem im Zylindergehäuse (2) befindlichen koaxialen Elektromotor (27) erfolgt.

7. Bremszylinder nach Anspruch 3, **dadurch gekennzeichnet, dass** die Mitnehmerspindel (9) als Schaufelrad (32) ausgebildet ist, und der Antrieb über Druckluft erfolgt.

8. Bremszylinder nach einem oder mehreren der Ansprüche 4 bis 6, **dadurch gekennzeichnet, dass** eine Abschaltung des Elektromotors (27) bei einem durch einen mechanischen Widerstand erhöhten Stromfluss erfolgt.

9. Bremszylinder nach einem oder mehreren der Ansprüche 4 bis 6, **dadurch gekennzeichnet, dass** eine Abschaltung des Elektromotors (27) nach Ablauf einer vorgegebenen Zeit erfolgt.

10. Bremszylinder nach einem oder mehreren der Ansprüche 4 bis 6, **dadurch gekennzeichnet, dass** eine Abschaltung des Antriebs (27, 32) bei Überschreitung einer bestimmten Antriebskraft erfolgt.

## Claims

1. Brake cylinder (1) having a parking brake function, especially for commercial vehicles, having a cylinder housing (2), a piston (3) and a piston tube (4) for actuation of a brake,
**characterized by** the following features:
a) a fixed threaded bolt (6) projecting into the piston tube (4), which bolt is attached by its upper end to the cylinder housing (2);
b) a clamping nut (7) running on the fixed threaded bolt (6), which nut rests against the piston (3) in a lower end position (park position);
c) a preferably fork-shaped rotatable drive element (8) which engages in the clamping nut (7);
d) a drive means (9, 10) for rotational movement of the drive element (8).

2. Brake cylinder (1) having a parking brake function, especially for commercial vehicles, having a cylinder housing (2), a piston (3) and a piston tube (4) for actuation of a brake,
**characterized by** the following features:
a) a rotatable threaded bolt (16) projecting into the piston tube (4), which bolt is attached by its upper end to a drive spindle (9);
b) a non-rotatable clamping nut (7) running on the rotatable threaded bolt (16), which nut rests against the piston (3) in a lower end position (park position);
c) a preferably fork-shaped fixed guide rod (18) which engages in the clamping nut (7);
d) a drive means (9, 10) for rotational movement of the rotatable threaded bolt (16).

3. Brake cylinder according to claim 1 or 2, **characterized in that** the drive of the drive element (8) or of the rotatable threaded bolt (16) is effected by means of a rotatable drive spindle (9) connected thereto.

4. Brake cylinder according to claim 3, **characterized in that** the drive spindle (9) is toothed and, by means of a drive shaft (10) provided with a worm (28), is driven by an external electric motor (27).

5. Brake cylinder according to claim 3, **characterized in that** the drive of the drive spindle (9) is effected by means of a circulating belt (29), which is driven by an external electric motor (27).

6. Brake cylinder according to claim 1 or 2, **characterized in that** the drive of the rotatable drive element (8) or of the rotatable threaded bolt (16) is effected with a coaxial electric motor (27) located in the cylinder housing (2).

7. Brake cylinder according to claim 3, **characterized in that** the drive spindle (9) is in the form of a paddle wheel (32), and the drive is effected by means of compressed air.

8. Brake cylinder according to one or more of claims 4 to 6, **characterized in that** the electric motor (27) is switched off in the event of an increase in the flow of current caused by mechanical resistance.

9. Brake cylinder according to one or more of claims 4 to 6, **characterized in that** the electric motor (27) is switched off when a preset time period has elapsed.

10. Brake cylinder according to one or more of claims 4 to 6, **characterized in that** the drive means (27, 32) is switched off when a certain drive force is exceeded.

## Revendications

1. Cylindre de freinage (1) avec fonction de frein de stationnement, en particulier pour véhicules utilitaires, comprenant un boîtier de cylindre (2), un piston (3), et un tube de piston (4) pour actionner un frein,
**caractérisé par** les caractéristiques suivantes :
a) un goujon fileté (6) stationnaire, pénétrant dans le tube de piston (4) et fixé par son extrémité supérieure sur le boîtier de cylindre (2),
b) un écrou de serrage (7) en déplacement sur le goujon fileté stationnaire (6), qui s'applique contre le piston (3) dans une position finale inférieure (position de stationnement) ;
c) un élément d'entraînement rotatif (8), de préférence en forme de fourche, qui s'engage dans l'écrou de serrage (7) ; et
d) un entraînement (9, 10) pour un mouvement rotatif de l'élément d'entraînement (8).

2. Cylindre de freinage (1) avec fonction de frein de stationnement, en particulier pour véhicules utilitaires, comprenant un boîtier de cylindre (2), un piston (3), et un tube de piston (4) pour actionner un frein,
**caractérisé par** les caractéristiques suivantes :
a) un goujon fileté (16) rotatif, pénétrant dans le tube de piston (4) et fixé par son extrémité supérieure sur une broche d'entraînement (9) ;
b) un écrou de serrage (7) non rotatif, en déplacement sur le goujon fileté rotatif (16), qui s'applique contre le piston (3) dans une position finale inférieure (position de stationnement) ;
c) une tige de guidage stationnaire (18), de préférence en forme de fourche, qui s'engage dans l'écrou de serrage (7) ; et
d) un entraînement (9, 10) pour un mouvement rotatif du goujon fileté rotatif (16).

3. Cylindre de freinage selon la revendication 1 ou 2, **caractérisé en ce que** l'entraînement de l'élément d'entraînement (8) ou du goujon fileté rotatif (16) a lieu au moyen d'une broche d'entraînement rotative (9) reliée à celui-ci.

4. Cylindre de freinage selon la revendication 3, **caractérisé en ce que** la broche d'entraînement (9) est dentée, et est entraînée par un moteur électrique externe (27) via un arbre d'entraînement (10) doté d'une vis tangente (28).

5. Cylindre de freinage selon la revendication 3, **caractérisé en ce que** l'entraînement de la broche d'entraînement (9) a lieu au moyen d'une courroie en circulation (29), laquelle est entraînée par un moteur électrique externe (27).

6. Cylindre de freinage selon la revendication 1 ou 2, **caractérisé en ce que** l'entraînement de l'élément d'entraînement rotatif (8) ou du goujon fileté rotatif (16) a lieu au moyen d'un moteur électrique coaxial (27) qui se trouve dans le boîtier de cylindre (2).

7. Cylindre de freinage selon la revendication 3, **caractérisé en ce que** la broche d'entraînement (9) est réalisée sous forme de roue à aubes (32), et **en ce que** l'entraînement a lieu au moyen d'air comprimé.

8. Cylindre de freinage selon l'une ou plusieurs des revendications 4 à 6, **caractérisé en ce qu'**une coupure du moteur électrique (27) a lieu lors d'une augmentation du courant électrique dû à une résistance mécanique.

9. Cylindre de freinage selon l'une ou plusieurs des revendications 4 à 6, **caractérisé en ce qu'**une coupure du moteur électrique (27) a lieu après expiration d'un temps prédéterminé.

10. Cylindre de freinage selon l'une ou plusieurs des revendications 4 à 6, **caractérisé en ce qu'**une coupure de l'entraînement (27, 32) a lieu lors du dépassement d'une force d'entraînement déterminée.
